# EUROPEAN PATENT APPLICATION

(11) **EP 4 671 563 A1**
(43) Date of publication of application: **31.12.2025**
(21) Application number: 24184913.2
(22) Date of filing: 27.06.2024
(51) Int. Cl.: F16D 65/00

(54) **BRAKE DUST COLLECTOR SYSTEM**

(71) Applicant: MANN+HUMMEL GmbH, 71636 Ludwigsburg (DE)
(72) Inventor: BOCK, Lukas, 71636 Ludwigsburg (DE)
(74) Representative: Mann + Hummel Intellectual Property

(57) **Abstract**

A brake dust collector system (1) for a motor vehicle comprises at least one brake assembly (2) comprising a brake pad mount (4) on which a brake pad (3) corresponding to a brake disc (20) of the motor vehicle is mountable, and an air suction assembly (5) comprising an air suction driving unit (30) and a brake dust collector (40), the air suction driving unit (30) being for driving an air flow from an intermediate space (6) between the brake disc (20) and the brake pad mount (4) to the brake dust collector (40), and the air flow carrying away brake dust that is produced during a braking action of the at least one brake assembly (2). The air suction assembly (5) further comprises an air seal generating unit (7) for generating an air seal around the intermediate space (6), the air seal generating unit (7) being attached to and encompassing an entire outer circumference of the brake pad mount (4).

## Description

### Technical Field

Embodiments relate to a brake dust collector system for a motor vehicle.

### Background Art

Brake dust collector systems are advantageously used with brake assemblies in motor vehicle applications. Such motor vehicle applications include, for example, passenger or goods vehicles, such as cars or trucks, and rail vehicles, such as passenger or freight trains. However, the brake dust collector systems may also be advantageously used in stationary applications. Those may include, for example, brake assemblies used in wind turbines.

A brake assembly includes a brake disc and a brake pad mounted on a brake pad mount. Upon actuation of the brake assembly the brake pad along with the brake pad mount is moved through the intermediate space between the brake pad mount and the brake disc and brought into contact with the brake disc. The friction between the brake disc and the brake pad initiates the braking action. At the same time abrasion of the brake pad occurs which produces brake dust particles. Said brake dust particles constitute a (fine) dust load in the ambient air in the intermediate space around the brake disc and the brake pad mount. Such (fine) dust load of the ambient air is harmful to humans and nature. It should therefore not escape into the environment.

To this end, an air suction assembly is provided. It includes an air suction driving unit. The air suction driving unit establishes and maintains the air flow from the intermediate space between the brake disc and the brake pad mount to the at least one brake dust collector. Said air flow thus carries away the brake dust produced during the braking action of the brake assembly. One example for the air suction driving unit is a pump. Said pump can drive the air flow as an active air suction driving unit. One example for the brake dust collector may include a filter element.

However, for example in motor vehicle applications such as passenger or freight trains, it is frequently encountered that the intermediate space between the brake pad and the brake disc is relatively large due to brake design and installation space requirements. Further, during the lifetime of the brake pad, the distance between the brake pad mount and the brake disc becomes lower, so eventually, the air suction driving unit comes in contact with the brake disc. Put another way, the intermediate space between the brake disc and the brake pad mount presents a rather large gap in which the air flow generated by the air suction driving unit may not efficiently drag along the brake dust and may not cover all the area where the brake dust could escape to the ambient environment. Hence, the efficiency of the brake dust collector system may decrease. Harmful brake dust particles might still escape into the ambient environment.

### Summary

It is therefore an objective of the embodiments to provide a brake dust collector system with an increased efficiency, which can effectively reduce the brake dust particle loss into the ambient environment.

This objective is achieved with a brake dust collector system for a motor vehicle, the brake dust collector system comprising at least one brake assembly comprising a brake pad mount on which a brake pad corresponding to a brake disc of the motor vehicle is mountable, and an air suction assembly comprising an air suction driving unit and a brake dust collector, the air suction driving unit being for driving an air flow from an intermediate space between the brake disc and the brake pad mount to the brake dust collector, and the air flow carrying away brake dust that is produced during a braking action of the at least one brake assembly. The air suction assembly further comprises an air seal generating unit for generating an air seal around the intermediate space, the air seal generating unit being attached to and encompassing an entire outer circumference of the brake pad mount.

The brake dust collector system is provided in which an air seal is generated around the intermediate space. This air seal effectively traps the brake dust produced during a braking action inside the intermediate space. Brake dust particle loss into the ambient environment of the brake assembly is thereby minimized. The air flow effectively carries away the main part of the brake dust produced during the braking action. The air seal generating unit encompasses the entire circumference of the brake pad mount. This further increases the efficiency of the brake dust collector system. On the one hand, it will further reduce brake dust particle loss into the ambient environment of the brake assembly. On the other hand, the brake dust collector system can thus be advantageously used in both forward travel as well as reverse travel of the corresponding motor vehicle without loss in efficiency and without switching anything in the brake dust collector system. This is particularly important for railway applications. Eventually, the air seal generating unit is attached to the brake pad mount. On the one hand, this provides a constructionally simple solution for installation of the air seal generating unit. On the other hand, this means that the air seal generating unit can easily be moved along during a relative movement of the brake disc and the brake pad. The large gap of the intermediate space can efficiently be bridged. What is more, the decrease in thickness of the brake pad over its life time due to abrasion can be taken into account. A mechanical or manual adjustment and/or tracking of the air seal generating unit can be avoided.

Further advantageous embodiments are provided in the dependent claims.

In embodiments, the air seal generating unit comprises an air flow inlet piping that is supplied with an inlet air flow directed into the intermediate space from an exhaust air side of the air suction driving unit. The air seal generating unit further comprises an air flow outlet piping that is supplied with an outlet air flow directed out of the intermediate space to a supply air side of the air suction driving unit, the air flow outlet piping being arranged on a side of the air flow inlet piping that faces toward the brake pad mount.

The air suction driving unit has an exhaust air side. This exhaust air is comprised of the air flow coming from the intermediate space after it has been cleaned from the brake dust by means of the brake dust collector. Hence, the exhaust air of the air suction driving unit is void of brake dust particles. It may be reused to generate the air flow in the intermediate space. To this end, the exhaust air of the air suction driving unit is redirected towards the intermediate space. The exhaust air enters the intermediate space via the air flow inlet piping of the air seal generating unit. There it is used as the inlet air flow. It constitutes one component of the air seal to be generated around the intermediate space. In order to effectively generate this air seal the air flow inlet piping is placed on the other side of the air flow outlet piping as seen from the brake pad mount. Therefore, the air flow inside the intermediate space can be directed from an outermost rim of the air seal generating unit toward the brake pad. Adjacent to the brake pad the air flow outlet piping may extract the air flow carrying the brake dust particles from the intermediate space. This will be described in the following paragraph.

The air suction driving unit further has a supply air side. This supply air is comprised of the air flow coming from the intermediate space which has not yet been cleaned from the brake dust by means of the brake dust collector. Hence, the supply air drawn by the air suction driving unit is laden with brake dust particles. It must therefore be extracted from the intermediate space. It is used as the outlet air flow. It constitutes the other component of the air seal to be generated around the intermediate space. In order to effectively generate this air seal the air flow outlet piping is placed on this side of the air flow inlet piping as seen from the brake pad mount. Therefore, the air flow inside the intermediate space originates from the air flow inlet piping at the outermost rim of the air seal generating unit. It then propagates inside the intermediate space in a direction toward the brake pad. There, adjacent to the brake pad the air flow outlet piping is arranged. The air flow outlet piping may then extract the air flow carrying the brake dust particles from the intermediate space. The air flow inlet piping is arranged farther away from the brake pad as compared to the air flow outlet piping. Hence, the air flow laden with brake dust within the intermediate space cannot escape into the ambient environment. An air seal is generated around the intermediate space.

In embodiments, the air flow inlet piping and/or the air flow outlet piping extend fully along the entire outer circumference of the brake pad mount. Ends of the air flow inlet piping and/or the air flow outlet piping are essentially flush with a plane of the brake pad mount.

Providing the air flow inlet piping and/or the air flow outlet piping in the plane of the brake pad mount is a constructionally simple solution for installation of the air seal generating unit. Installation of the air flow inlet piping and/or the air flow outlet piping in the plane of the brake pad mount means that they do not protrude into the intermediate space. The air flow inlet piping and/or the air flow outlet piping may be arranged essentially flush with the plane of the brake pad mount. This means that the air seal generating unit can easily be moved along during a relative movement of the brake disc and the brake pad. The risk of damaging the air flow inlet piping and/or the air flow outlet piping during such movement is minimized. The potentially large gap of the intermediate space can efficiently be bridged. What is more, the decrease in thickness of the brake pad over its life time due to abrasion can be taken into account. A mechanical or manual adjustment and/or tracking of the air seal generating unit can be avoided. Installation of the air flow inlet piping and/or the air flow outlet piping at least partially, or optionally fully, along the entire circumference of the brake pad mount increases the efficiency of the brake dust collector system. Brake dust particle loss into the ambient environment is reduced.

In embodiments, the air flow inlet piping and the air flow outlet piping are arranged on opposite sides of the brake pad mount at which a main part of the brake dust is produced during the braking action of the at least one brake assembly.

The generation of the air seal for trapping the brake dust inside the intermediate space is focused on the region of the brake pad where the most brake dust is actually produced. Generation of the air seal in regions where effectively none or only very little brake dust is produced can be avoided. The efficiency of the brake dust collector system can further be increased.

In embodiments, the brake dust collector system further comprises an air flow inlet manifold fluidically connected to the air flow inlet piping, the air flow inlet manifold being in fluid communication with the exhaust air side of the air suction driving unit. The brake dust collector system further comprises an air flow outlet manifold fluidically connected to the air flow outlet piping, the air flow outlet manifold being in fluid communication with the supply air side of the air suction driving unit.

The air flow inlet piping can be fluidically connected to an air flow inlet manifold. The air flow inlet manifold can be in fluid communication with the exhaust air side of the air suction driving unit. The air flow inlet manifold allows to supply the inlet air flow to any region of outer circumference of the brake pad mount where an air flow is needed to carry away brake dust particles. The air flow outlet piping can be fluidically connected to an air flow outlet manifold. The air flow outlet manifold can be in fluid communication with the supply air side of the air suction driving unit. The air flow outlet manifold allows to supply the outlet air flow to any region of outer circumference of the brake pad mount where an air flow is needed to carry away brake dust particles.

### Brief Description of Drawings

Further advantages can be seen in the following description of the drawings. The drawings show examples of the embodiments. The drawings, description and claims contain numerous features in combination. The person skilled in the art will expediently consider the features individually and combine them to form further useful combinations.
Figure 1 shows a sectional view of a brake dust collector system according to the embodiments.
Figure 2 shows a perspective top view of the brake dust collector system according to the embodiments.
Figure 3 shows a perspective bottom view of the brake dust collector system according to the embodiments.
Figure 4 shows a diagram of a brake dust filter system including a vacuum generator and a suction bracket arranged at a brake disk, according to the embodiments.

### Description of Embodiments

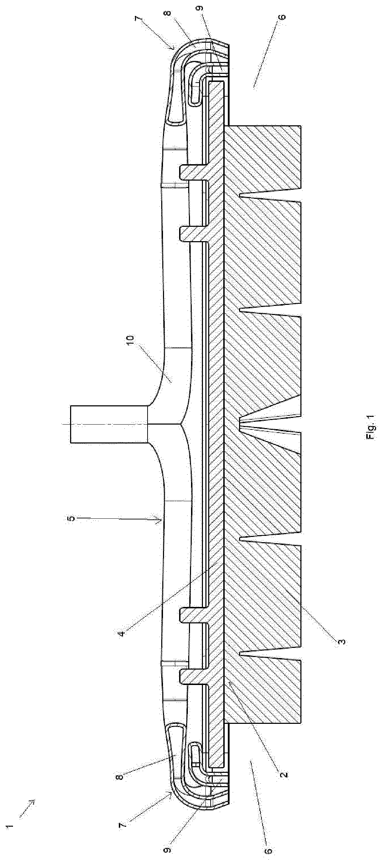

The figures only show examples and are not to be understood as limiting. In the following concurrent reference is made to Figs. 1 to 4.

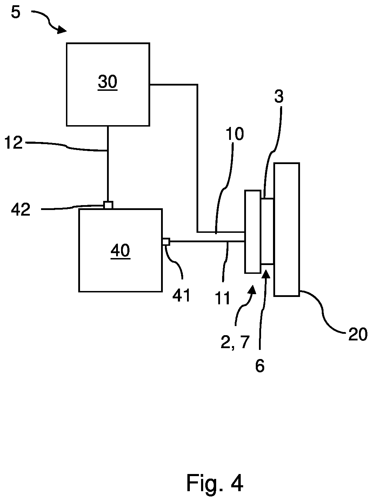

Figs. 1 to 3 show a brake dust collector system 1. The brake dust collector system 1 comprises a brake assembly 2 including a brake disc 20 (shown in Fig. 4) and a corresponding brake pad 3 mounted on a brake pad mount 4. The brake dust collector system 1 further comprises an air suction assembly 5. The air suction assembly 5 includes at least one air suction driving unit 30 (shown in Fig. 4) for driving an air flow from an intermediate space 6 between the brake disc 20 and the brake pad mount 4 to at least one brake dust collector 40 (shown in Fig. 4). The air flow is used to carry away brake dust produced during a braking action of the brake assembly 2. The brake dust collector 40 cleans the air flow from the brake dust particles. It may include a filter element.

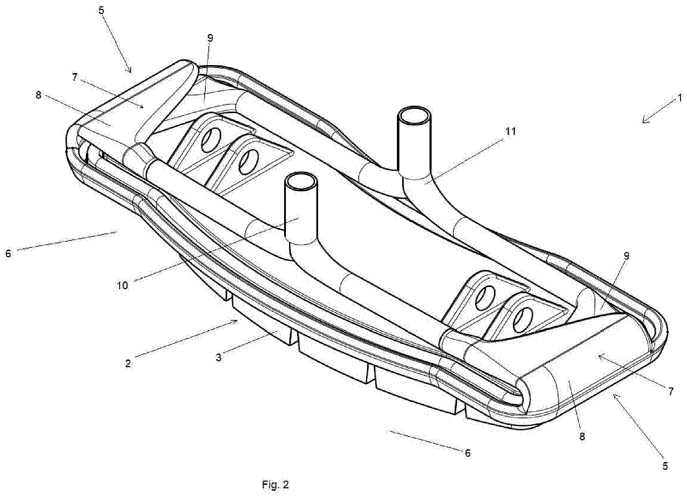

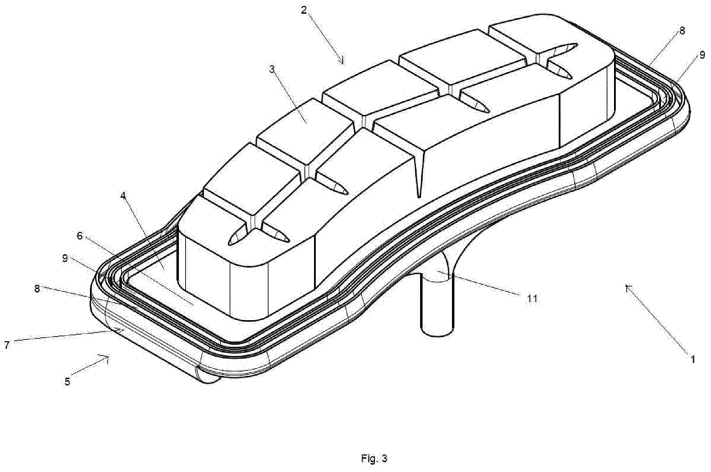

The air suction assembly 5 also comprises an air seal generating unit 7. The air seal generating unit 7 is attached to and encompasses the entire outer circumference of the brake pad mount 4. This is best seen in Fig. 3. The air seal generating unit 7 includes an air flow inlet piping 8. The air seal generating unit 7 includes an air flow outlet piping 9. The air flow outlet piping 9 is arranged on a side of the air flow inlet piping 8 facing toward the brake pad mount 4. The flow inlet piping 8 is arranged on a side of the air flow outlet piping 9 facing away from the brake pad mount 4. The air flow inlet piping 8 is fluidically connected to an air flow inlet manifold 10. The air flow outlet piping 9 is fluidically connected to an air flow outlet manifold 11. This is best seen in Fig. 2.

The air seal generating unit 7 is used to generate an air seal around the intermediate space 6. The air seal serves to prevent an escape of brake dust into the ambient environment of the brake assembly 2. To this purpose, the air seal generating unit 7 operates as follows:
Referring to Figs. 1 to 4, the air suction driving unit 30 is activated. The air suction driving unit 30 establishes and maintains a supply air flow. This supply air flow is constituted of an outlet air flow of the intermediate space 6. The outlet air flow is laden with brake dust from the intermediate space 6. The outlet air flow is sucked into the air flow outlet piping 9. It propagates through the air flow outlet manifold 11. The outlet air flow (i.e., the supply air flow) then enters the brake dust collector 40 via a supply air flow inlet 41. There it is cleaned from brake dust. At this point the supply air flow is void of brake dust. It is converted into an exhaust air flow. The exhaust air flow is then redirected from the brake dust collector 40 via an exhaust air flow outlet 42 and an air flow outlet manifold 12 back into the air flow inlet manifold 10. It propagates to the air flow inlet piping 8. The exhaust air flow exits the air flow inlet piping 8 into the intermediate space 6. There the clean exhaust air flow presents an inlet air flow. Said inlet air flow now flows through the intermediate space 6 dragging along new brake dust. The inlet air flow exits the intermediate space 6 through the air flow outlet piping 9. At this point the inlet air flow is again converted into the outlet air flow, thus the supply air flow. The above process repeats.

In this way an air seal is generated around the intermediate space 6. In order to effectively generate this air seal the air flow outlet piping 9 is placed on the side of the air flow inlet piping 8 as seen from the brake pad mount 4. The air flow inlet piping 8 is placed on the other side of the air flow outlet piping 9 as seen from the brake pad mount 4. Therefore, the air flow inside the intermediate space 6 originates from the air flow inlet piping 8 at the outermost rim of the air seal generating unit 7. It then propagates inside the intermediate space 6 in a direction toward the brake pad 3. There, adjacent to the brake pad 3 the air flow outlet piping 9 is arranged. The air flow outlet piping 9 may then extract the air flow carrying the brake dust particles from the intermediate space 6. The air flow inlet piping 8 is arranged farther away from the brake pad 3 as compared to the air flow outlet piping 9. Hence, the air flow laden with brake dust within the intermediate space 6 cannot escape into the ambient environment. The air seal is generated around the intermediate space 6.

In order to generate an effective air seal the air flow inlet piping 8 and the air flow outlet piping 9 are arranged on opposite sides of the brake pad mount 4. This is best seen in Fig. 2. At those positions the main part of the brake dust is produced during the braking action of the brake assembly 2. Generation of the air seal in regions where effectively none or only very little brake dust is produced can be avoided. The efficiency of the brake dust collector system 1 can further be increased.

As can best be seen in Fig. 3, the air flow inlet piping 8 and the air flow outlet piping 9 extend fully along the entire outer circumference of the brake pad mount 4. This increases the efficiency of the air seal and of hence brake dust collector system 1. Brake dust particle loss into the ambient environment is reduced.

As can best be seen in Fig. 1, the installation of the air flow inlet piping 8 and the air flow outlet piping 9 is done in the plane of the brake pad mount 4. This means the air flow inlet piping 8 and the air flow outlet piping 9 do not protrude into the intermediate space 6. The ends of the air flow inlet piping 8 and the air flow outlet piping 9 may be arranged essentially flush with the plane of the brake pad mount 4. This means that the air seal generating unit 7 can easily be moved along during a relative movement of the brake disc 20 and the brake pad 3. The risk of damaging the air flow inlet piping 8 and the air flow outlet piping 9 during such movement is minimized. The potentially large gap of the intermediate space 6 can efficiently be bridged. What is more, the decrease in thickness of the brake pad 3 over its life time due to abrasion can be taken into account. A mechanical or manual adjustment and/or tracking of the air seal generating unit 7 can be avoided. This is particularly advantageous for railway applications.

Referring to Fig. 4, the air suction driving unit 30 may be connected to the exhaust air flow outlet 42 of the brake dust filter 40 via the air flow outlet manifold 12. The air suction driving unit 30 may suck particle laden air (i.e., the supply air flow) from the brake dust collector system 1 through the air flow outlet manifold 11 and the brake dust collector 40, and may suck clean air (i.e., the exhaust air flow) from the brake dust collector 40 through the air flow outlet manifold 12 and release the clean air into the ambient environment.

The air suction driving unit 30 may further be connected to the air flow inlet manifold 10. The air suction driving unit 30 may supply the exhaust air flow through the air flow inlet manifold 10 into the intermediate space 6 of the brake dust collector system 1.

## Claims

1. A brake dust collector system (1) for a motor vehicle, the brake dust collector system (1) comprising:
at least one brake assembly (2) comprising a brake pad mount (4) on which a brake pad (3) corresponding to a brake disc (20) of the motor vehicle is mountable; and
an air suction assembly (5) comprising an air suction driving unit (30) and a brake dust collector (40), the air suction driving unit (30) being for driving an air flow from an intermediate space (6) between the brake disc (20) and the brake pad mount (4) to the brake dust collector (40), and the air flow carrying away brake dust that is produced during a braking action of the at least one brake assembly (2),
**characterized in that** the air suction assembly (5) further comprises an air seal generating unit (7) for generating an air seal around the intermediate space (6), the air seal generating unit (7) being attached to and encompassing an entire outer circumference of the brake pad mount (4).

2. The brake dust collector system (1) according to claim 1, wherein the air seal generating unit (7) comprises an air flow inlet piping (8) that is supplied with an inlet air flow directed into the intermediate space (6) from an exhaust air side of the air suction driving unit (30).

3. The brake dust collector system (1) according to claim 2, further comprising an air flow inlet manifold (10) fluidically connected to the air flow inlet piping (8), the air flow inlet manifold (10) being in fluid communication with the exhaust air side of the air suction driving unit (30).

4. The brake dust collector system (1) according to claim 2, wherein the air seal generating unit (7) further comprises an air flow outlet piping (9) that is supplied with an outlet air flow directed out of the intermediate space (6) to a supply air side of the air suction driving unit (30), the air flow outlet piping (9) being arranged on a side of the air flow inlet piping (8) that faces toward the brake pad mount (4).

5. The brake dust collector system (1) according to claim 4, further comprising an air flow outlet manifold (11) fluidically connected to the air flow outlet piping (9), the air flow outlet manifold (11) being in fluid communication with the supply air side of the air suction driving unit (30).

6. The brake dust collector system (1) according to claim 4, wherein the air flow inlet piping (8) and/or the air flow outlet piping (9) extend fully along the entire outer circumference of the brake pad mount (4).

7. The brake dust collector system (1) according to claim 4, wherein the air flow inlet piping (8) and the air flow outlet piping (9) are arranged on opposite sides of the brake pad mount (4) at which a main part of the brake dust is produced during the braking action of the at least one brake assembly (2).

8. The brake dust collector system (1) according to claim 4, wherein ends of the air flow inlet piping (8) and/or the air flow outlet piping (9) are essentially flush with a plane of the brake pad mount (4).
